# EUROPEAN PATENT APPLICATION

(11) **EP 1 955 912 A2**
(43) Date of publication of application: **13.08.2008**
(21) Application number: 08150883.0
(22) Date of filing: 31.01.2008
(51) Int. Cl.: B60R 22/00, B60R 22/48, B60R 21/015

(54) **Seat belt tension-sensing device and method of determining an amount of tension being applied to a seat belt webbing**

(30) Priority: 09.02.2007 US 673262
(71) Applicant: Delphi Technologies, Inc., Troy, Michigan 48007 (US)
(72) Inventor: Hunkeler, Hugh R., Kokomo, IN 46901 (US); Bernard, Edward C., Kokomo, IN 46901 (US)
(74) Representative: Denton, Michael John

(57) **Abstract**

A seat belt tension-sensing device (30) and a method for determining the amount of tension applied to a scat belt webbing (40) are provided. The seat belt tension-sensing device (30) has a tension sensor (72) configured to generate a signal in response to displacement of a flexible substrate (90) that is indicative of an amount of tension being applied to the seat belt webbing (40).

## Description

### TECHNICAL FIELD

This application relates to a seat belt tension-sensing device and a method for determining an amount of tension being applied to a seat belt webbing.

### BACKGROUND OF THE INVENTION

Seat belt tension-sensing devices have been used in vehicles for setting an airbag system at a proper deployment force associated with a particular seat occupant. Moreover, seat belt tension-sensing devices can aid in detecting an improperly installed child seat.

Seat belt tension-sensing devices have been integrated into the seat belt anchor assembly. This requires the sensing devices to be extremely robust to withstand the force of crash and restrain a vehicle occupant. Another currently used system provides a child seat belt tension switch. Such a switch, however, only indicates whether a tension level exceeds a certain preset value. It does not yield a signal that indicates an actual tension level in a seat belt webbing.

Accordingly, the inventors herein have recognized a need for improved seat belt tension-sensing device that can be directly mounted on a seat belt webbing and can generate a signal indicating an amount of tension being applied to the seat belt webbing.

### SUMMARY OF THE INVENTION

A seat belt tension-sensing device in accordance with an exemplary embodiment is provided. The seat belt tension-sensing device includes a housing configured to be operably coupled to a portion of a seat belt webbing and to receive the seat belt webbing therethrough. The seat belt tension-sensing device includes a tension sensor mounted to the housing. The tension sensor has a deflectable substrate that is disposed adjacent a portion of the seat belt webbing. The deflectable substrate is configured to be displaced by the portion of the seat belt webbing relative to the housing in response to tension being applied to the seat belt webbing. The tension sensor is configured to generate a signal in response to displacement of the flexible substrate that is indicative of an amount of tension being applied to the seat belt webbing.

A method of determining an amount of tension being applied to a seat belt webbing utilizing a seat belt tension-sensing device in accordance with another exemplary embodiment is provided. The seat belt tension-sensing device has a housing and a tension sensor. The housing is configured to be operably coupled to a portion of the seat belt webbing so as to receive the belt webbing therethrough. The tension sensor is mounted to the housing and has a flexible substrate disposed against a portion of the seat belt webbing. The method includes applying tension to the seat belt webbing such that the flexible substrate of the tension sensor is displaced relative to the housing. The method further includes generating a signal from the tension sensor in response to the flexible substrate being displaced. The signal is indicative of an amount of tension being applied to the seat belt webbing.

### BRIEF DESCRIPTION OF THE DRAWINGS

Figure 1 is a schematic of a vehicle having a seat belt tension-sensing device in accordance with an exemplary embodiment;
Figure 2 is a schematic of the seat belt tension-sensing device of Figure 1;
Figure 3 is a schematic of a tension sensor utilized in the seat belt tension-sensing device of Figure 2;
Figure 4 is a cross-sectional schematic of a portion of the tension sensor of Figure 3;
Figure 5 is an electrical schematic of a circuit utilized in the tension sensor of Figure 3;
Figure 6 is a schematic of the seat belt tension-sensing device of Figure 2 coupled to a seat belt webbing having a relatively small amount of tension being applied thereto;
Figure 7 is a schematic of the seat belt tension-sensing device of Figure 2 coupled to a seat belt webbing having a relatively large amount of tension being applied thereto; and
Figure 8 is a flowchart of a method for determining an amount of tension being applied to a seat belt webbing in accordance with another exemplary embodiment.

### DESCRIPTION OF THE PREFERRED EMBODIMENT

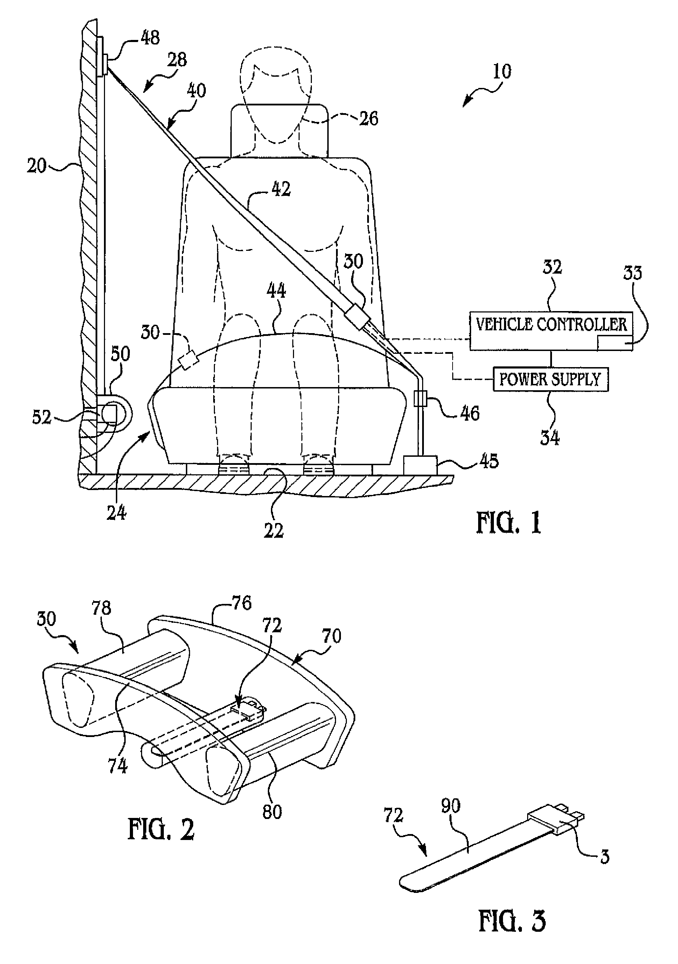

Referring to Figure 1, a vehicle 10 having a seat belt tension-sensing device 30 in accordance with an exemplary embodiment is illustrated. The vehicle 10 further includes a B-pillar 20, a floor 22, a seat 24, a seat belt restraint system 28, an electronic controller 32, and a power supply 34.

The seat 24 is provided to hold an occupant 26 therein. The seat 24 is fixedly attached to the floor 22. The B-pillar 20 is fixedly attached to the floor 22.

The seat belt restraint system 28 is provided to hold the occupant 26 within the seat 24. The seat belt restraint system 28 includes a seat belt webbing 40, a seat belt anchor 45, a seat belt buckle assembly 46, a seat belt anchor 48, and a seat belt retractor assembly 50. The seat belt anchor 45 is fixedly attached to the floor 22. Both the seat belt anchor 48 and the seat belt retractor assembly 50 are fixedly attached to the B-pillar 20. The seat belt webbing 40 includes a torso webbing 42 which extends over a torso of the occupant 26 and a lap webbing 44 which extends over a lap of the occupant 26. The seat belt webbing 40 extends from a fixedly attached portion of the right side of seat 24 across the lap of the occupant 26, to the seat belt buckle assembly 46. The torso webbing 42 extends from the seat belt buckle assembly 46 across the torso of the occupant 26 to the seat belt anchor 48. From the seat belt anchor 48, the torso webbing 42 extends to the seat belt retractor assembly 50. The seat belt retractor assembly 50 includes a spool 52 holding a portion of the seat belt webbing 40 therein. The seat belt buckle assembly 46 extends to the seat belt anchor 45.

Referring to Figures 1-3, the seat belt tension-sensing device 30 is provided to generate a signal indicative of an amount of tension being applied to the seat belt webbing 40. In the exemplary embodiment, the seat belt tension-sensing device 30 is coupled to the torso webbing 42. In an alternative embodiment, however, the seat belt tension-sensing device 30 can be coupled to the lap webbing 44. The seat belt tension-sensing device 30 includes a housing 70 and a tension sensor 72.

The housing 70 includes sidewalls 74 and 76 which are disposed opposite one another, and transverse walls 78 and 80 which extend between the side walls 74 and 76. The housing 70 defines an interior region for routing the seat belt webbing 40 therethrough.

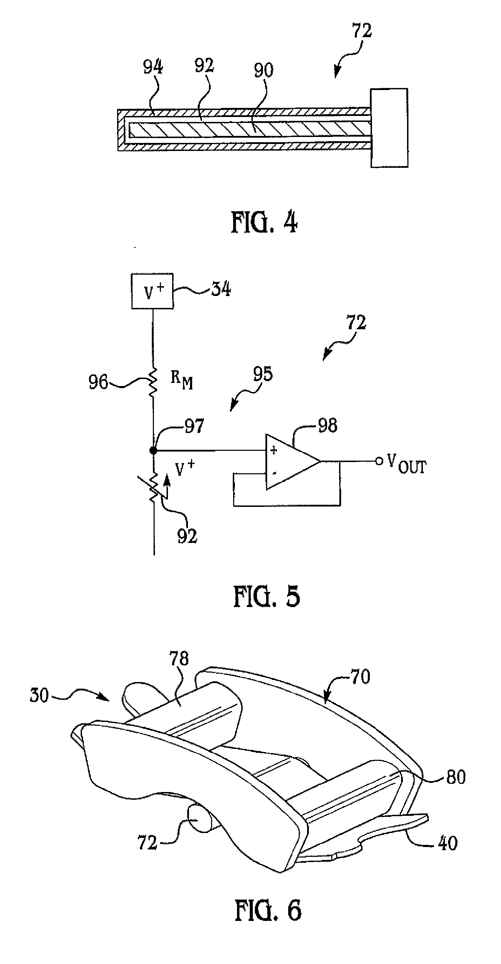

Referring to Figures 3 and 4, the tension sensor 72 is operably coupled at one end to the side wall 76 and extends transversely from the side wall 76 toward the side wall 74. The tension sensor 72 is further disposed on the side wall 76 between the transverse walls 78 and 80. In one exemplary embodiment, a portion of the tension sensor 72 is insert molded into a portion of the side wall 76.

Referring to Figures 4 and 5, the tension sensor 72 includes a flexible substrate 90, a conductive layer 92, an outer layer 94, and a circuit 95. In one exemplary embodiment, the flexible substrate 90 is constructed from a flexible plastic. Of course in alternative embodiments, other types of flexible materials known to those skilled in the art could be utilized instead of plastic. In one exemplary embodiment, the conductive layer 92 comprises a bend sensitive ink that is applied to be flexible substrate 90. The bend sensitive ink comprises tiny carbon-polymer composite particles whose resistance changes when the flexible substrate 90 is deflected or bent. Because the bend sensitive ink is relatively hard and brittle, when the flexible substrate 90 is bent, the ink separates into many micro-cracks that, upon movement, open and close in relation to an amount of deflection or displacement of the substrate 90. As the flexible substrate 90 is bent over a given radius repeatedly, the ink maintains its integrity and continues to have a relatively strong bond to the flexible substrate 90. Further, resistance of the bend sensitive ink varies as the flexible substrate 90 is deflected due to tension being applied to be seat belt webbing 40. The outer layer 94 is disposed over the conductive layer 92 to cover and protect the conductive layer 92. In one exemplary embodiment, the outer layer 94 comprises a plastic layer. Of course, in an alternative embodiment, a tension sensor could have another operational parameter, other than a resistance, that varies in response to deflection or displacement of a flexible substrate. For example, a tension sensor could have an operational parameter, such as a capacitance or an inductance for example, that varies in response to deflection or displacement of a flexible substrate.

Referring to Figure 5, the circuit 95 is provided to generate a signal indicative of an amount of the deflection or displacement of a portion of the flexible substrate 90 and further indicative of an amount of tension being applied to the seat belt webbing 40. The circuit 95 includes a resistor 96 electrically coupled between the power supply 34 and a node 97. The conductive layer 92 is electrically coupled between the node 97 and electrical ground. The node 97 is further operably coupled to a non-inverting terminal of the operational amplifier 98. Further, the non-inverting terminal of the operational amplifier 98 is electrically coupled to an output terminal of the operational amplifier 98. The output terminal of the operational amplifier 98 is electrically coupled to the vehicle controller 32. Accordingly, during operation, the operational amplifier 98 outputs a signal indicative of resistance of the conductive layer 92, which is further indicative of an amount of deflection or displacement of the flexible substrate 90, which is further indicative of amount of tension being applied to the seat belt webbing 40. Of course, in an alternative embodiment, a circuit could be configured to output a signal indicative of an operational parameter, other than resistance, associated with a layer disposed about a flexible substrate, which is further indicative of an amount of deflection or displacement of a flexible substrate. For example, a circuit could output a signal indicative of a capacitance or an inductance associated with a layer disposed about a flexible substrate (or the flexible substrate itself), which is further indicative of an amount of deflection or displacement of the flexible substrate.

Referring to Figure 1, the vehicle controller 32 is provided to receive a signal from the seat belt tension-sensing device 30 and to determine an amount of tension being applied to the seat belt webbing 40 based on the signal. As shown, the vehicle controller 32 is electrically coupled to the power supply 34 and to the tension sensor 72 of the seat belt tension-sensing device 30.

The power supply 34 is provided to supply electrical power to the vehicle controller 32 and to the tension sensor 72 of the seat belt tension-sensing device 30.

Referring to Figure 6, a schematic of the seat belt tension-sensing device 30 with a portion of the seat belt webbing 40 routed therethrough is illustrated. In particular, in Figure 6, the seat belt webbing 40 has a relatively small amount of tension being applied thereto and as result an amount of deflection of the tension sensor 72 from an initial position is relatively small. As shown, the seat belt webbing 40 is routed underneath a portion of the transverse wall 78 and then over a portion the tension sensor 72 and then underneath a portion of the transverse wall 80.

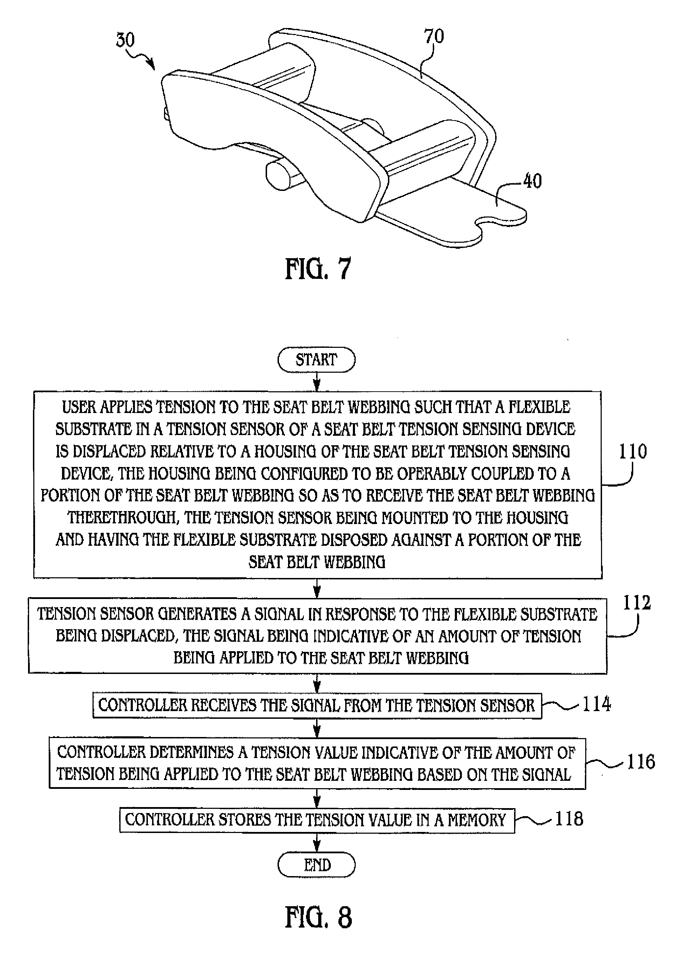

Referring to Figure 7, a schematic of the seat belt tension-sensing device 30 with a portion of the seat belt webbing 40 routed therethrough is illustrated. In particular, in Figure 7, the seat belt webbing 40 has a relatively large amount of tension being applied thereto and as result an amount of deflection of the tension sensor 72 from an initial position is relatively large.

Referring to Figure 8, a flowchart of a method for determining an amount of tension being applied to the seat belt webbing 40 will now be explained.

At step 110, a user or vehicle occupant applies tension to the seat belt webbing 40 such that the flexible substrate 90 in the tension sensor 72 of the seat belt tension-sensing device 30 is displaced relative to the housing 70 of the seat belt tension-sensing device 30. The housing 70 is configured to be operably coupled to a portion of the seat belt webbing 40 so as to receive the belt webbing 40 therethrough. The tension sensor 72 is mounted to the housing 70 and has the flexible substrate 90 disposed against a portion of the seat belt webbing 40.

At step 112, the tension sensor 72 generates a signal in response to the flexible substrate 90 being displaced. The signal is indicative of an amount of tension being applied to the seat belt webbing 40.

At step 114, the controller 32 receives the signal from the tension sensor 72.

At step 116, the controller 32 determines a tension value indicative of the amount of tension being applied to the seat belt webbing 40 based on the signal.

At step 118, the controller 32 stores the tension value in a memory 33. After step 118, the method is exited. It should be noted that the foregoing method may be repeated at predetermined time intervals to update the stored tension value.

It should be understood that the orientation of the seat belt tension-sensing device 30 on the seat belt webbing 40 as described with reference to the illustrated exemplary embodiments is exemplary only and not limiting in nature. Other positions for placement of seat belt tension-sensing device 30 relative to the seat belt webbing 40 are achievable and are consistent with the teachings of the present invention. The seat belt tension-sensing device 30 can be attached at various locations along the length of the seat belt webbing 40.

Further, the illustrated embodiments use the seat belt tension-sensing device 30 in a vehicle seat, which should be viewed as a non-limiting exemplary embodiment. The device 30 can be used with a wide variety of other seat belt types and systems. For example, it is contemplated that the device 30 can be utilized in chairs, sofas, scales, beds and mattresses, hospital equipment, cribs, airplane seats, train seats, commuter or school bus seats, wheel chairs, boat seats, ski lift chairs, amusement rides, and theater seats.

The seat belt tension-sensing device 30 and the method for determining an amount of tension being applied to a seat belt webbing represent a substantial advantage over other devices and methods. In particular, the device 30 provides a technical effect of generating a signal indicative of an amount of tension being applied to the seat belt webbing utilizing a sensor with a deflectable substrate disposed against the seat belt webbing.

While the invention has been described with reference to one or more exemplary embodiments, it will be understood by those skilled in the art that various changes may be made and equivalent elements may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed for carrying out this invention, but that the invention will include all embodiments falling within the scope of the appended claims.

## Claims

1. A seat belt tension-sensing device (30), comprising:
a housing (70) configured to be operably coupled to a portion of a seat belt webbing (40) and to receive the seat belt webbing (40) therethrough; and
a tension sensor (72) mounted to the housing (40), the tension sensor (72) having a flexible substrate (90) that is disposed adjacent a portion of the seat belt webbing (40), the deflectable substrate (90) configured to be displaced by the portion of the seat belt webbing (40) relative to the housing (70) in response to tension being applied to the seat belt webbing (40), the tension sensor (72) being configured to generate a signal in response to displacement of the flexible substrate (90) that is indicative of an amount of tension being applied to the seat belt webbing (40).

2. The seat belt tension-sensing device (30) of claim 1, wherein the housing (40) is configured to be operably coupled to the portion of the seat belt webbing (40) comprises a lap-restraining portion (44) of the seat belt webbing (40).

3. The seat belt tension-sensing device (30) of claim 1, wherein the housing (70) is configured to be operably coupled to the portion of the seat belt webbing (40) comprises a torso-restraining portion (42) of the seat belt webbing (40).

4. The seat belt tension-sensing device (30) of claim 1, wherein the housing (70) has first and second sidewalls (74, 76) opposite one another and a transverse member (78) coupled between the first and second sidewalls (74,76), the seat belt webbing (40) between routed through a channel between the first and second sidewalls (74, 76), the flexible substrate (90) of the tension sensor (72) extending transversely from the first sidewall (74) toward the second sidewall (76).

5. The seat belt tension-sensing device (30) of claim 1, wherein tension sensor (72) includes an electronic circuit (95) operably coupled to the flexible substrate (90), the flexible substrate (90) having a flexible portion with a conductive layer (92) thereon, the conductive layer (92) having a parameter that varies in response to the displacement of the flexible substrate (90), the electronic circuit (95) configured to determine a parameter level of the conductive layer (92) and to generate the signal based on the parameter level, the signal being indicative of an amount of deflection of the flexible substrate (90) and an amount of tension being applied to the seat belt webbing (40).

6. The seat belt tension-sensing device (30) of claim 5, wherein the conductive layer (92) comprises a carbon-polymer composite.

7. The seat belt tension-sensing device (30) of claim 1, wherein the tension sensor (72) is insert-molded to the housing (70).

8. A method of determining an amount of tension being applied to a seat belt webbing (40) utilizing a seat belt tension-sensing device (30), the seat belt tension-sensing device (30) having a housing (70) and a tension sensor (72), the housing (70) being configured to be operably coupled to a portion of the seat belt webbing (40) so as to receive the belt webbing (40) therethrough, the tension sensor (72) being mounted to the housing (70) and having a flexible substrate (90) disposed against a portion of the seat belt webbing (40), the method comprising:
applying tension to the seat belt webbing (40) such that the flexible substrate (90) of the tension sensor (72) is displaced relative to the housing (70); and
generating a signal from the tension sensor (72) in response to the flexible substrate (90) being displaced, the signal being indicative of an amount of tension being applied to the seat belt webbing (40).

9. The method of claim 8, further comprising:
receiving the signal at a controller (32);
determining a tension value indicative of the amount of tension being applied to the seat belt webbing based (40) on the signal, utilizing the controller (32) and storing the tension value in a memory (33), utilizing the controller (32).
